Europäisches Patentamt

European Patent Office

Office européen des brevets

(11) Veröffentlichungsnummer: **0 262 363**
**B1**

(12) **EUROPÄISCHE PATENTSCHRIFT**

(45) Veröffentlichungstag der Patentschrift:
**13.09.89**

(51) Int. Cl.⁴: **B23K 26/00**

(21) Anmeldenummer: **87111872.5**

(22) Anmeldetag: **17.08.87**

(54) Verfahren und Vorrichtung zur kontinuierlichen Herstellung rohrförmiger Körper mittels Laser-Längsnahtschweissung.

(30) Priorität: **27.09.86 DE 3632952**

(43) Veröffentlichungstag der Anmeldung:
**06.04.88 Patentblatt 88/14**

(45) Bekanntmachung des Hinweises auf die Patenterteilung:
**13.09.89 Patentblatt 89/37**

(84) Benannte Vertragsstaaten:
**AT BE CH DE ES FR GB GR IT LI LU NL SE**

(56) Entgegenhaltungen:
DE-A- 1 752 476
DE-A- 3 304 717
US-A- 4 315 132
US-A- 4 577 088

PATENT ABSTRACTS OF JAPAN, Band 7,
Nr. 100 (C-164)[1245], 28. April 1983
PATENT ABSTRACTS OF JAPAN, Band 9,
Nr. 180 (C-293)[1903], 25. Juli 1985
PATENT ABSTRACTS OF JAPAN, Band 10,
Nr. 96 (M-469)[2153], 12. April 1986

(73) Patentinhaber: **Hoesch Aktiengesellschaft,
Eberhardstrasse 12, D-4600 Dortmund 1(DE)**

(72) Erfinder: **Krebs, Rolf, Dipl.-Ing., Karl-Mosterts-Strasse 5,
D-4700 Hamm(DE)**
Erfinder: **Welsing, Otto, Dipl.-Ing., Grüner Weg 5,
D-5870 Hemer(DE)**
Erfinder: **Retzlaff, Friedhelm, Wilhelm-Busch-Strasse 8,
D-4618 Kamen-Methler(DE)**
Erfinder: **Friedhelm, Günther, Dipl.-Ing., Ellinghauser
Strasse 156, D-4600 Dortmund 15(DE)**
Erfinder: **Wahl, Hans-Jürgen, Breul 16,
D-4400 Münster(DE)**
Erfinder: **Gerber, Manfred, Dipl.-Ing., Jägerallee 67,
D-4700 Hamm 1(DE)**
Erfinder: **Gross, Heinz, Dipl.-Ing.,
Reichsmarkstrasse 142, D-4600 Dortmund-Syburg(DE)**

## Beschreibung

Die Erfindung betrifft ein Verfahren zur Herstellung rohrförmiger Körper, bei dem beschichtetes oder unbeschichtetes Stahlband kontinuierlich zu einem Schlitzrohr eingeformt und die gegenüberliegenden Bandkanten mit hoher Geschwindigkeit durch einen Laserstrahl hoher Energiedichte mit oder ohne Zufuhr von Zusatzmaterial unter Schutzgas längsnahtgeschweißt werden.

Solche Verfahren der Laserschweißung von rohrförmigen Körpern sind bekannt und finden besondere Anwendung im Bereich der Herstellung von dünnwandigen Rohrkörpern aus legierten Stählen bzw. Edelstählen. So lehrt etwa die US-Patentschrift 4 315 132 ein Verfahren, bei dem ein Metallband von einer Spule abgezogen und in einem Formtrichter kontinuierlich zu einem Schlitzrohr geformt wird, dessen Bandkanten anschließend mit einem Laserstrahl längsnahtgeschweißt werden.

In der Praxis stellt man jedoch bei der Nutzung dieses Verfahrens fest, daß mit steigender Wanddicke trotz genauer Positionierung der Bandkanten - wie sie in der o. g. Patentschrift gefordert wird - und trotz guter Bandkantenflächenvorbereitung diese Art der Schweißung ohne Preßdruck auf die Bandkantenfläche keine zufriedenstellende Nahtgeometrie liefert.
Bedingt durch das Zusammenspiel zwischen Schweißgeschwindigkeit und einem sehr steilen Temperaturgradienten - d. h. extrem schnelle Aufheizung und Abkühlung des Nahtbereiches und geringe Wärmeleitung in die Nachbarbereiche - sowie durch bei diesem Schweißverfahren entstehende Strömungen im Schweißbad bilden sich Nahtrückfälle an Innen- und Außenoberfläche beidseitig der Schweißnaht aus.
Aufgrund der hierdurch entstehenden partiellen Wanddickenreduktion zeigen sich solche Nahtrückfälle besonders bei der Weiterverarbeitung von Rohren durch Biegeverfahren als kritische Stellen.

Das Verfahren zur Verschweißung der Stoßflächen von Blechen, welches in der DE-33 04 717 A1 gezeigt wird, beinhaltet eine Stauchung bzw. Verformung der Schmelze und damit der Stoßflächen während des Schweißvorgangs.
Dieser auch in der Rohrherstellung - z. B. bei induktiven Schweißverfahren - als "Preßschweißung" bekannte Prozess erlaubt eine qualitativ nicht so aufwendige Bandkantenvorbereitung, da der Teil der Schmelze bzw. der Bandkantenflächen, welcher evtl. Unregelmäßigkeiten oder Ungänzen enthält, aus dem Nahtbereich herausgedrückt wird und in Form eines Stauchwulstes auf der Innen- und Außenoberfläche der Naht erkaltet.

Bei der Rohrschweißung kann eine Pressung der Schmelze in flüssigem oder teigigem Zustand jedoch nur wegabhängig und nicht kraftabhängig erfolgen, da die flüssige Schmelzphase des Werkstoffes eine meßbare Stauchkraftübertragung nicht zuläßt.
Sichtbar wird dies in der unkontrollierten Ausbildung des Stauchwulstes auf beiden Seiten der Naht.

Weiterhin führt bei Rohren, welche aus gewalztem Vormaterial hergestellt werden, die Anwendung einer solchen Preßschweißung zu einer unerwünscht starken Umlenkung der Werkstoffzeilen im Nahtbereich.

Darüber hinaus ist mit steigender Wanddicke durch den bei der Laserschweißung extrem schmalen Nahtbereich in Verbindung mit einem außerordentlich steilen Temperaturgefälle ein Ausstauchen der Werkstoff- und Formungänzen in ausreichendem Maße nicht mehr gegeben.

Der Erfindung liegt daher die Aufgabe zugrunde, ein Verfahren anzugeben, welches die industrielle Fertigung laserstrahlgeschweißter Rohre aus Metall auch bei steigenden Wanddicken und höheren Geschwindigkeiten möglich macht und dabei eine Naht mit so ausgebildeten Gefüge-, Geometrie- und Werkstoffeigenschaften bereitstellt, daß der gesamte Nahtbereich in allen für die nach der Herstellung vorgesehene Verwendung notwendigen Eigenschaften denen des Grundmaterials entspricht.

Gelöst wird diese Aufgabe bei dem gattungsgemäßen Verfahren durch die kennzeichnenden Merkmale des Anspruches 1).

Weiterbildende Merkmale sind in den Unteransprüchen erfaßt.

Des weitern macht die Erfindung eine Vorrichtung verfügbar, die zur Durchführung des gattungsgemäßen Verfahrens geeignet ist.

Ausgehend vom allgemeinen Gedanken der Erfindung, daß nämlich laserstrahlgeschweißte Rohre industrieller Fertigung mit einer von Wanddicke und Schweißgeschwindigkeit unabhängiger Nahtqualität nur durch eine Veränderung und Aufgliederung eines komplexen Schweißverfahrens mit Hilfe einzeln steuerbarer, auf Wanddicken- und Schweißgeschwindigkeitsänderungen reagierender Funktionen geschehen kann, bietet das offenbarte Verfahren den Vorteil, daß durch ein der eigentlichen Schweißung und der darauf folgenden geregelten Abkühlung nachgeschaltetes Stauchen der Schweißnaht eine definierte, vorhersehbare und steuerbare Nahtausbildung erfolgt.

Durch ein solches Verfahren, bei dem die Bandkanten vorteilhafterweise zunächst unter Beibehaltung eines geringen Schweißspaltes ohne Druck senkrecht zur Bandkantenfläche schmelzgeschweißt und nach definierter Abkühlung gestaucht werden, beseitigt man die beim Schmelzschweißen entstehenden Nahtrückfälle beidseits der Naht auf der Innen- und Außenoberfläche im Übergangsbereich zum Grundmaterial.
Gleichzeitig vermeidet man aber einen sich zufällig und in Form und Volumen völlig unkontrolliert ausbildenden Schweißwulst auf der Innen- und Außenseite der Naht, wie er entsteht, wenn das Prinzip der Preßschweißung angewandt wird, d. h. der Stauchung der Schmelze im Schweißpunkt, in dem eine Stauchkraft durch die äußerst geringe Druckfestigkeit der flüssigen Metallphase nicht aufgenommen werden kann.

Die Tiefschweißung mit Hilfe des Laserstrahles erfolgt unter Bildung eines Wärmezylinders (Keyhole), welcher den Laserstrahl im vom Focusbereich beaufschlagten Material umgibt und aus zwei Phasen besteht, nämlich aus dem geschmolzenen Material und aus verdampftem, elektrisch-ladungstragendem Material, dem Plasma.

Bei Produktionsgeschwindigkeit und einer definierten Leistungsdichte von mindestens $0,5 \cdot 10^6$ W/cm² werden bei dem beanspruchten Verfahren diese beiden hochabsorbtionsfähigen Phasen fest etabliert und die Bandkanten über die gesamte Tiefe des Schweißspaltes auf Schmelztemperatur erhitzt.

Die beanspruchte Verfahren verwirklicht darüber hinaus die Steuerung des Stauchweges und/oder der Stauchkraft in Abhängigkeit vom Stauchwulst nach erfolgter Stauchung, da durch die absehbare, gleichförmig stets annähernd kreissegmentförmige Ausbildung des Stauchwulstes sowohl auf der Innen- als auch der Außenseite eine Beurteilung des Volumens auch mit nur einer gemassenen geometrischen Größe des jeweiligen Schweißwulstes erfolgen kann.

Die beanspruchte Vorrichtung ist je nach Bemessung in der Lage, auch für Rohre mit großen Wanddicken/Durchmesserverhältnis durch Bereitstellung aller notwendigen Stellorgane, Formeinrichtungen, Beobachtungssysteme und Steuerungen eine betriebssichere Laserschweißung mit guter Nahtgeometrie und hoher Produktionsgeschwindigkeit durchzuführen.

Grundsätzlich erfolgt die Schweißung unter Schutzgas, da hierdurch die Plasmabildung vorteilhaft beeinflußt und Reaktionen des Materials mit dem Luftsauerstoff vermieden werden können. Besondere Legierungen, die durch die Erwärmung der Bandkanten auf Schmelztemperatur eine Veränderung erfahren und wieder in den Ursprungszustand - auch im Schweißnahtbereich - versetzt werden sollen, bedingen die Zufuhr von Zusatzmaterial.

Beste Ergebnisse bezüglich der Schweißnahtgeometrie zeigen sich dann, wenn das Verhältnis von Innen- zu Außenstauchwulstvolumen kleiner als 1:3 wird.

Zur Beurteilung der Stauchwulstvolumina erhält man eine genaue Information durch Vermessung des Innen- und/oder Außenstauchwulstes direkt nach der Stauchung durch Aufnahmegeräte, die jeweils nur eine geometrische Größe des Stauchwulstes in dieser Größe proportionale elektrische Impulse umwandeln. Diese Vermessung erfolgt bei Rohren mit kleinem Durchmesser vorteilhafterweise mit optischen Aufnahmegeräten, da geringe Bauhöhe und hoher Integrationsgrad einen Einsatz für Innen- und Außenbetrachtung möglich machen. Bei größeren Rohrdurchmessern zeigt sich die mechanische Abtastung des Stauchwulstes aufgrund ihrer einfachen Bauweise als vorteilhaft und ist in ihrer Reaktionsschnelligkeit bei dem hier offenbarten Verfahren mit einer sich relativ langsam ändernden Stauchwulstbeschaffenheit angepaßt.

Bei C-Stählen und kleinen Rohrdurchmessern sind anstelle der komplexen optischen Aufnahmegeräte induktive Aufnahmegeräte oft praktischer einsetzbar.

Die jeweils einzig zu messende geometrische Größe ist je nach Rohrabmessung und Aufnahmegerät vorteilhaft die Höhe, die Breite oder die Flankenwinkel des Stauchwulstes.

Die einfachste Alternative bei relativ großen Rohrdurchmessern ist eine Höhenmessung des Stauchwulstes durch mechanische Taster oder induktive Aufnehmer. Bei Edelstahlrohren größeren Durchmessers ist eine optische Breitenmessung sinnvoll, während bei kleinen Edelstahlrohren, insbesondere wenn sie auf die Ausbildung des Innenstauchwulstes untersucht werden sollen, eine optischen Flankenwinkelmessung mit schräg auf den Stauchwulst auftreffendem Meßlicht angebracht ist.

Realisiert wird die Steuerung der Stauchung durch Betätigung der Stellorgane der jeweiligen Staucheinrichtungen, wobei vorteilhafterweise eine Verarbeitungseinrichtung, die den jeweiligen geometrischen Größen der Stauchwulste proportionalen elektrischen Impulse vergleicht und einem definierten Volumenverhältnis bei gegebener Abmessung zuordnet und daraus einen Steuerimpuls an die Zustellorgane der Staucheinrichtungen gibt.

Bekannte, einfache Ausführung solcher Staucheinrichtungen existieren in Form von Rollen und/oder Rollenkäfigen oder - besonders bei verschleißfesten Materialien - in Form von Gleitformsteinen und/oder -ringen.

Die Abkühlung zwischen Schmelzschweißung und Stauchung erfolgt vorteilhafterweise bei C-Stählen bis auf maximal eine dem Haltpunkt Ar 3 des Eisenkohlenstoffdiagramms entsprechende Temperatur; bei Edelstählen und austenitischen Stählen bis auf maximal eine der Erstarrung und der Dendritenbildung ensprechende Temperatur.

Unter Einhaltung dieser Temperaturgrenzen erhält man eine ausreichende Festigkeit und damit Stauchkraftübertragungsfähigkeit der Schmelze, vermeidet aber gleichzeitig das Einfrieren von Spannungen oder den Einbau von Kaltverfestigung begünstigenden Gefügeausbildungen in den Nahtbereichen.

Bei entsprechend festgelegter längerer Kühlstrecke ist es von Vorteil, die Abkühlraten durch zusätzliche Wärmezufuhr in die Bandkanten vor und/oder nach dem Schweißpunkt zu steuern. Dadurch können verschiedene, für unterschiedliche Materialien spezifische Vorzugstemperaturen bei der Stauchung angefahren werden.

Vorteilhaft ist ebenfalls die Steuerung der Stauchtemperatur in Abhägigkeit einer Referenztemperatur des Nahtbereiches nach der Stauchung, da hier auch die Umgebungseinflüsse und Änderungen im Schweißnahtbereich erfaßt und berücksichtigt werden können.

Als Temperatureinrichtung nutzt man vorteilhafterweise ein Strahlungspyrometer, welches einen der Temperatur des Nahtbereiches proportionalen elektrischen Impuls erzeugt. Mit Hilfe eines solches proportionalen Impulses kann eine Verarbeitungseinrichtung auf einfachste Weise Steuerimpulse für eine Erwärmungseinrichtung bereitstellen.

Alternativ zu der bei den C-Stählen erprobten und einfachen induktiven Erwärmung durch ein über den Nahtbereich positionierte oder um das Schlitzrohr bzw. Rohr geführte Induktionsspule kann die Erwärmung von Edelstählen und/oder austenitischen Materialien mit Hilfe von Laserstrahlen erfolgen.

Die Vorteile hierbei zeigen sich in der exakten Wärmedosierung genauso wie in der Möglichkeit, bei genügender Leistungsfähigkeit des Schweißlasers zur Vorwärmung der Bandkanten einen Teilstrahl aus dem Laserschweißstrahl, z. B. durch teildurchlässige Spiegel, auszukoppeln.

Eine besonders einfache Möglichkeit der Erwärmung ist durch Wärmestrahler gegeben, die - bekanntermaßen mit Strom oder Gas betrieben - über dem Nahtbereich installiert werden können.

Die beste Anfangs-Nahtgeometrie der Schmelzschweißnaht wird dann erreicht, wenn beide Bandkanten im Laserfocusbereich einer Stahlung annähernd gleicher Intensität ausgesetzt sind. Bei den bekannten Intensitätsverteilungen eines Laserstrahles geschieht dies vorteilhafterweise dadurch, daß die Bandkanten in gleichem Abstand von der optischen Achse des focussierten Laserstrahls gegenüberliegend geführt wird. Bei einem Laserstrahlfocusdurchmesser zwischen 0,2 und 2 mm liegt dieser Abstand in der Regel zwischen 0,04 mm und 0,25 mm.

Realisiert wird diese Führung in einfacher Weise dadurch, daß der Focuspunkt des Laserstrahles mit Hilfe einer ebenen Positionssteuerung den Bandkanten angepaßt wird, wobei
- die Tiefenkoordinate mit der optischen Achse des focussierten Laserstrahles übereinstimmt
- und die Querkoordinate senkrecht zur Rohrachse und als Bogensegment ausgebildet ist, dessen Mittelpunkt in der Rohrachse liegt und dessen Radius durch den Abstand des Focuspunktes von der Rohrachse bestimmt wird.

Eine Steuerung mit solchen Koordinaten wird z. B. durch eine Drei-Koordinatensteuerung ermöglicht, wobei die Schweißspaltabweichung in Umfangsrichtung als Eingangsgröße zur Positionierung des Focuspunktes in der Querkoordinate durch eine berührungsloses Nahtverfolgungssystem ermittelt und in proportionale elektrische Impulse umgeformt wird. Ein optisch arbeitendes System bietet hierbei den Vorteil, daß eine Messung ausgesprochen präzise und unabhängig vom Außendurchmesser und, falls die Abweichung im Umfangsrichtung einer zur Bandkante parallelen Markierung ermittelt wird, sogar eine Messung synchrom zum Schweißpunkt möglich ist.

Der zur optischen Achse des focussierten Laserstrahles parallele Abstand der Rohroberfläche an den Bandkanten relativ zum Focuspunkt läßt sich sehr in proportionale elektrische Impulse umformen und als Eingangsgröße zur Steuerung der Tiefenkoordinate nutzen durch eine Abstandmessung. Mit besonderer Präzision arbeitet hier eine Lasermeßeinrichtung, welche ebenso den Vorteil bietet, daß die Messung in großer Nähe des Schweißpunktes durchgeführt werden kann und daß zur Messung auch ein aus dem Schweißstrahl ausgekoppelter Teilstrahl benutzt werden kann.

Eine Verarbeitungseinheit erzeugt unter Aufarbeitung der elektrischen Impulse des Nahtverfolgungssystems und des Abstandmeßsystems auf einfache Weise Steuerimpulse für die Dreikoodinatensteuerung.

Die Bandkanten werden bei der Laserschweißung zur Einkopplung genügend großer Energie günstigerweise so nah zusammengeführt, daß ihr Abstand, d. h. die Spaltbreite kleiner ist als der Durchmesser des Focuspunktes ist.

Dies geschieht in einfacher Weise entweder durch auf dem Rohrumfang insbesondere in Rohrlängsrichtung abrollende Führungselemente in der bekannten Form von Rollenlinealen oder -käfigen sowie durch Führungsrollen.

Für Materialien mit entsprechend großem Verschleißwiderstand sind auf dem Rohrumfang insbesondere in Rohrlängsrichtung gleitende Führungselemente sinnvoll, welche aus Gleitführungen für die Bandkanten und/oder Formtrichtern und -steinen bestehen.

Zur Gewährleistung einer versatzfreien Zusammenführung der Bandkanten ist es von Vorteil, die dafür nötigen Führungselemente zumindestens in der der Versatzrichtung parallelen Höhenachse zu steuern, wobei zunächst der zwischen diesen Führungselementen und dem Schweißpunkt bestehende Kantenversatz durch eine Meßeinrichtung ermittelt und in proportionale elektrische Impulse umgeformt wird.

Von Vorteil ist hier eine Lichtschnittmeßeinrichtung, die neben einer schnellen Meßfrequenz auch eine seitenrichtige Ausdeutung des Bandkantenversatzes ermöglicht.

In Kombination mit Stellungsfühlern, die die jeweilige Stellung der Führungselemente zur Führung der Bandkanten in der Versatzrichtung in proportionale elektrische Impulse umformen, erstellt eine Verarbeitungseinrichtung leicht die Steuerimpulse für diese Führungselemente. Günstigerweise sind entsprechende Stellungsfühler als Potentiometer ausgebildet.

Gleichermaßen formt die Verarbeitungseinrichtung die elektrischen Impulse der Schweißspaltbreitenmessung in Steuersignale für die Führungslemente um, welche die Bandkantenflächen aufeinander zuführen.

Weiterhin wird eine präzise Schmelzschweißung vorteilhafterweise durch eine Bandkantenvorbereitung erreicht, die auf eine mittlere Rauhtiefe der Bandkantenflächen führt, die geringer ist als die Hälfte eines dem Focusdurchmesser des Laserstrahles im Schweißpunkt benachbarten Strahldurchmesser. Dieser Strahldurchmesser hängt dabei ab vom Focussierungsgrad des Laserstrahles, welcher wiederum in Abhängigkeit von der Wanddicke eingestellt wird.

Die Vorbereitung der Bandkanten geschieht auf einfache Weise durch spanende Bearbeitung, d. h. durch Hobeln, Schleifen oder Fräsen der Bandkantenflächen durch eine mit entsprechenden Werkzeugen ausgerüstete Bandkantenvorbereitungseinheit in einem Arbeitsgang oder in mehreren die Oberfläche der Bandkante sukzessive verfeinernden spanenden Arbeitsschritten.

Mit geringem Aufwand realisierbar ist eine Bandkantenvorbereitung durch Stauchverformung senkrecht zu den Bandkantenflächen mit Hilfe einer entsprechenden Staucheinrichtung. Bei einer Rollen- und/oder Käfigeinformung des Bandes erfolgt dies günstigerweise durch integrierte Messerscheibengerüste.

Ebenfalls vorteilhaft ist die Vorbereitung der Bandkanten durch das Laserschneidverfahren, welches sich durch besonders niedrige mittlere Rauhtiefen der Schnittflächen auszeichnet.

Es kann dabei neben separaten Laserschneideinheiten bei genügend leistungsstarker Laserschweißanlage auch ein Teilstrahl aus dieser ausgekoppelt und zum Schneiden der Bandkanten genutzt werden.

Anhand eines Ausführungsbeispiels soll die Erfindung näher erläutert werden.

Es zeigen:

Fig. 1 eine Prinzipskizze zur Erläuterung des gattungsgemäßen Verfahrens und zur Darstellung der Verhältnisse im Laserschweißpunkt

Fig. 2 eine schematisch Darstellung einer Laserschweißvorrichtung zur Durchführung des gattungsgemäßen Verfahrens

Fig. 3a die schematische Darstellung des Lichtschnittmeßverfahrens

Fig. 3b zur Ermittlung des Kantenversatzes

Fig. 3c einen schematischen Querschnitt entlang der Linie A-A der Fig. 2

Fig. 4a eine prinzipielle Darstellung des Schweißpunktes im Schnitt

Fig. 4b eine prinzipielle Darstellung eines Stauchpunktes im Schnitt

Fig. 5 die schematische Darstellung einer Bandkantenvorbereitungseinrichtung

Fig. 6 das Schliffbild des Nahtbereiches eines ferritischen Edelstahles nach der Laserschmelzschweißung Fig. 7 das Schliffbild des Nahtbereiches des gleichen ferritischen Edelstahles nach Abkühlen und nachfolgender Stauchung.

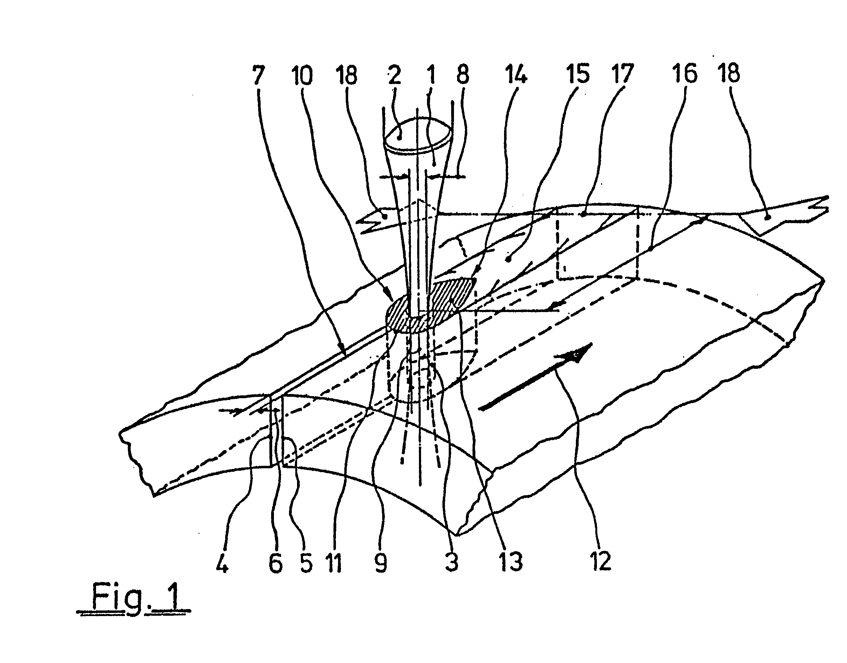

Die Prinzipskizze (Fig. 1) zeigt einen Laserstrahl 1, der mit Hilfe einer Linse 2 focussiert wird und im Schweißpunkt eine Leistungsdichte zwischen $0,5 \times 10^6$ W/cm² und $5 \times 10^7$ W/cm² aufweist.

Hierdurch wird unter Bildung eines den Laserstrahl im Material umgebenden Wärmezylinders 3 (Keyhole) eine Tiefschweißung der Bandkanten 4 und 5 ermöglicht.

Die Spaltbreite 6 des Schweißspaltes 7 ist hierbei geringer als der Focusdurchmesser 8 des Laserstrahls 1 im Schweißpunkt 9. Das tropfenförmig ausgebildete Schweißbad 10 schmilzt an seinem vorderen Rand 11 die in der Vorschubrichtung 12 einlaufenden Bandkanten 4 und 5. Die Schmelze 13 (schraffiert) erstarrt in einer hinteren Randzone 14 des Schweißbades 10.

Die weiter erstarrende Schweißnaht 15 durchläuft daraufhin die Kühlstrecke 16 bis zum Stauchpunkt 17 und der durch die Kraft Pfeile 18 dargestellten Stauchung.

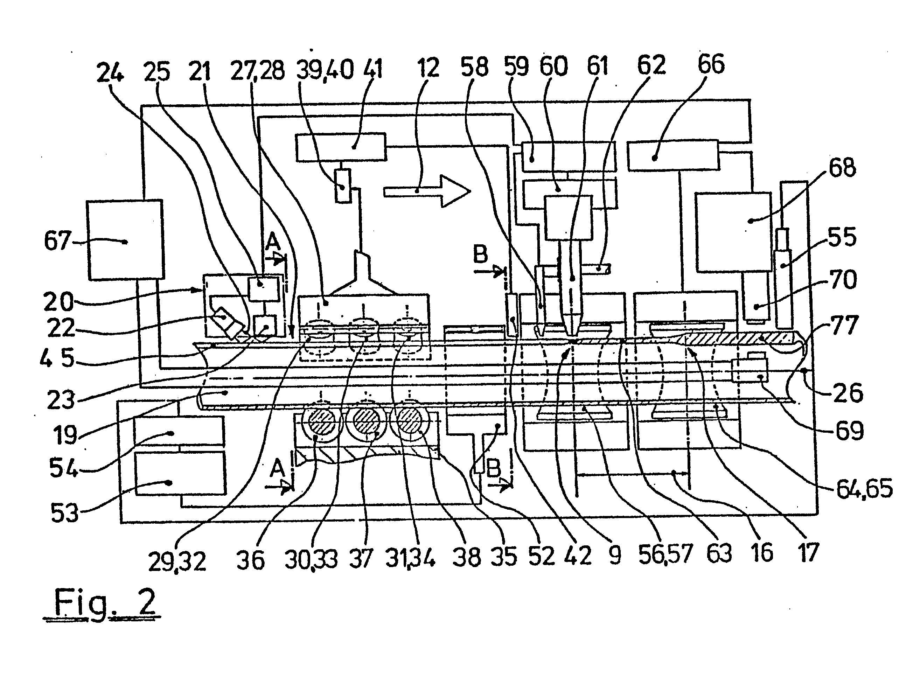

Fig. 2 zeigt die schematische Darstellung einer Laserschweißeinrichtung zur Durchführung des durch die Prinzipskizze 1 erläuterten gattungsgemäßen Verfahrens.

Das auf bekannte Weise durch eine Rollen- und/oder Käfigformung zum Schlitzrohr 19 gebogene Bandvormaterial mit einer Banddicke von 5 mm hat bereits eine hier nicht dargestellte Bandkantenvorbereitung durch Hobeln und anschließendes Feinschleifen der Körnung 120 durchlaufen und besitzt in den Flächen der Bandkanten 4 und 5 eine mittlere Rauhtiefe von Rm = 40 μm.

Geschweißt wird hier ein ferritischer Edelstahl der Güte X 5 CV Ti 12 zu einem Stahlrohr mit dem Durchmesser DA = 63,5 mm.

Ein berührungslos arbeitendes Nahtverfolgungssystem 20 besteht in bekannter Weise aus einer schräg zur Vorschubrichtung 12 die Schlitzrohroberfläche 21 anstrahlende Lichtquelle 22 einer über dem Schweißspalt 7 positionierten Fernsehkamera 23, welche anhand der von der Rohroberfläche 21 reflektierten oder im Schweißspalt 7 absorbierten Lichtstrahlen 24 ein kontrastreiches Videobild aufnimmt sowie aus der Auswerteeinheit 25.

Zur Aufnahme der Schweißspaltabweichung in Umfangsrichtung, welche zur Querkoordinatensteuerung des Focuspunktes 9 benötigt wird, genügt hier eine Industriefernsehkamera, welche ein Binär-Bild als Halbbild quer zur Rohrachse 26 von z. B. 512 x 256 Bildpunkten ohne Grauabstufungen aufnimmt.

Die Auswerteeinheit 25 verarbeitet die Amplituden der eingehenden Videosignale in bekannter Weise mit Hilfe einem mittleren Helligkeitswert entsprechenden Schwelle, welche die Unterscheidung zwischen Reflektion und Absorbtion der Lichtstrahlen 24 ausreichend präzise delektiert.

Die Verschiebung der Kontrastgrenze, d. h. die Grenze zwischen reflektierender und absorbierender Fläche des Werkstückes wird nach elektronischer Ermittlung des Flächenschwerpunktes des Kontrastunterschiedes durch eine der Schweißspaltabweichung in Umfangsrichtung proportionalen Analogspannung Ug der weiteren Verarbeitung zur Verfügen gestellt.

Jede der Bandkanten 4 und 5 wird durch Rollenlineale 27 und 28 (Fig. 3c) mit Hilfe der dem Rohrumfang angepaßt kalibrierten Rollen 29 - 34 von außen geführt.

Die Rollenlineale 27 und 28 sind senkrecht zur Rohrachse 26 höhenverstellbar und erhalten ihre Stützkraft durch das Stütz-Rollenlineal 35 mit den Prismenrollen 36, 37 und 38.

Das Maß der eingestellten Höhe der Rollenlineale 27 und 28 wird über die jeweiligen Potentiometer 39 und 40 festgestellt (Fig. 2) und als proportionale analoge Spannung Ur der Verarbeitungseinheit 41 zugeführt.

Die Lichtschnittmeßvorrichtung 42 erfaßt den Versatz den Bandkanten 4 und 5 sowie die Schweißspaltbreite 6 vor dem Schweißpunkt 9.

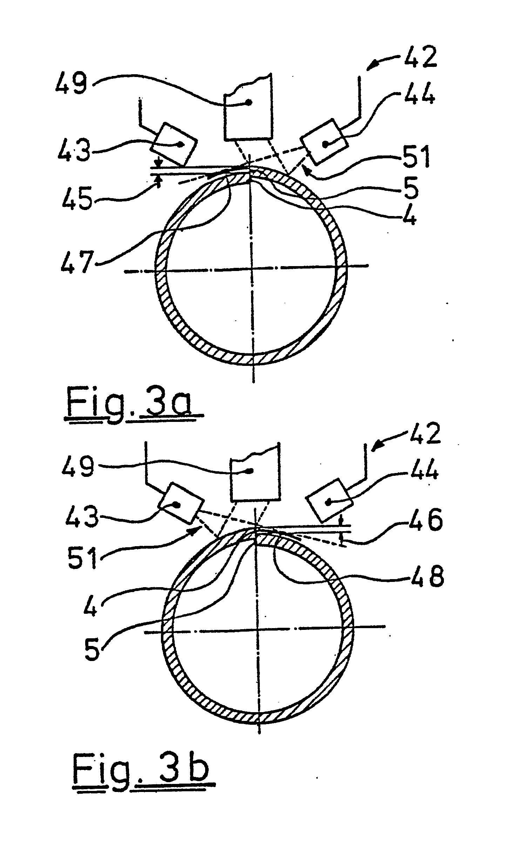

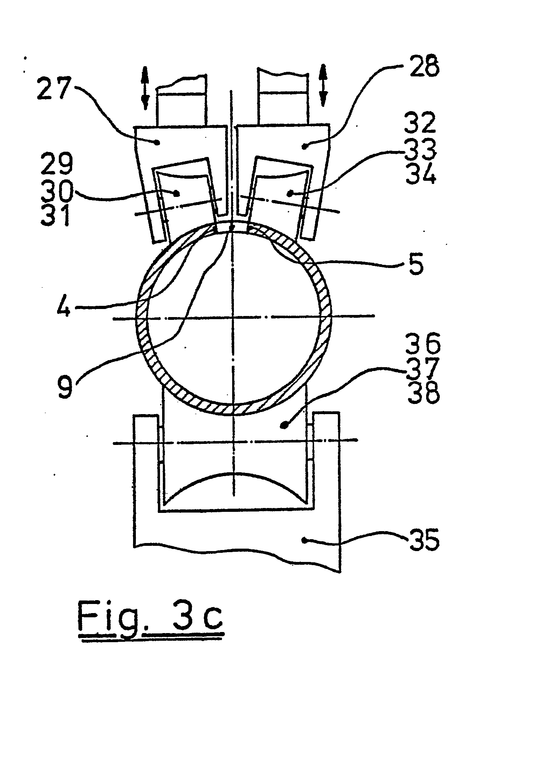

Fig. 3a und 3b zeigen prinzipiell die Funktionsweise der Lichtschnittmeßvorrichtung 42 mit den beiden links und rechts des Schweißspaltes 7 positionierten Beleuchtungskörpern 43 und 44, welche abwechselnd mit einer Frequenz von größer gleich 3 Hz den Schweißspalt 7 schräg zu den Bandkanten 4 und 5 und senkrecht zur Rohrachse anleuchten.

Je nach Art des Bandkantenversatzes 45 oder 46 bilden sich dabei die abgeschatteten Flächen 47 und 48, welche von der Diodenzeilenkamera 49 anhand der unterschiedlich reflektierten Lichtstrahlenbündel 50 und 51 detektiert werden.

Der Schweißspalt liefert ebenfalls eine seiner - Breite entsprechende Schatten- bzw. Absorbtionsfläche.

Die mit einem Auflösungsvernögen von bis zu 3000 Bildpunkten pro Zeile ausgerüsteten Diodenzeilenkamera 49 formt die der Höhe des Bandkantenversatzes 45 bzw. 46 proportionale Länge der Schattenflächen 47 bzw. 48 in eine analoge Spannung Ub um, welche der Verarbeitungseinheit 41 zugeführt wird. Gleichermaßen wird eine der Breite des Schweißspaltes proportionale Spannung US der Verarbeitungseinheit 41 von der Kamera 49 zugeleitet. Nach Aufarbeitung und Vergleich mit der der Höhenstellung der Rollenlineale 27 und 28 proportionalen Spannung Ur erzeugt die Verarbeitungseinheit 41 eine Steuerspannung, die den hier nicht gezeigten Stellmotoren für die Höhenverstellung der Rollenlineale 27 und 28 zugeführt wird.

Fig. 2 zeigt im weiteren Verlauf der Fertigungseinrichtung die Induktionsspule 52, welche über den Mittelfrequenzgenerator 53 betrieben wird.

Der Mittelfrequenzgenerator 53 wird in seiner Lei-stung gesteuert durch eine Verarbeitungseinrich-tung 54, die von dem Strahlungspyrometer 55, welcher die Nahttemperatur hinter dem Stauchpunkt 17 mißt und damit die Vorwärmung der Bandkanten 4 und 5 bestimmt, eine dieser Temperatur proportionale analoge Spannung Ut erhält und in eine Steuerspannung für den Mittelfrequenzgenerator 53 umformt.

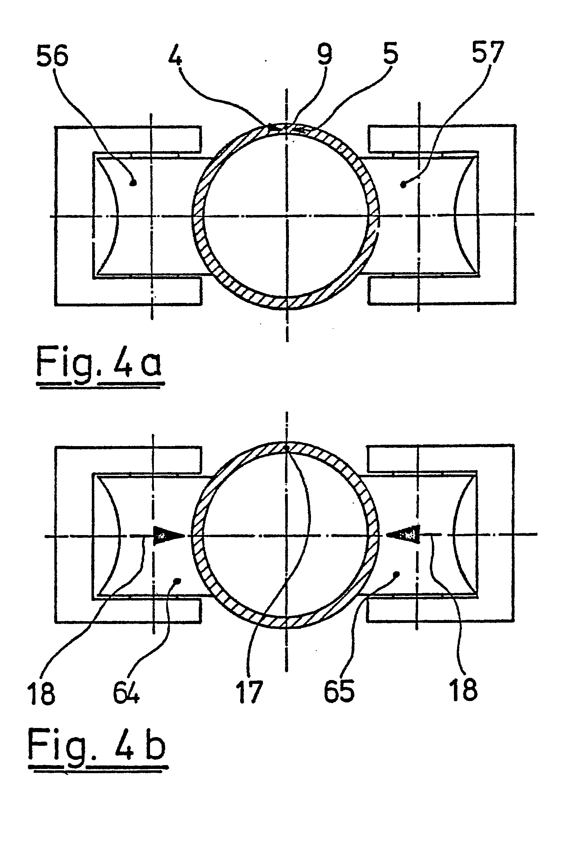

Die Schweißführungsrollen 56 und 57 führen das Schlitzrohr 19 im Schweißpunkt 9, ohne jedoch Druck auf die Bandkanten 4 und 5 senkrecht zur Bandkantenfläche auszuüben (Fig. 4a) und unter Aufrechterhaltung eines 0,3 mm breiten Schweißspaltes 6.

Gesteuert wird die Zustellung der Schweißführungsrollen 56 und 57 Verarbeitungseinrichtung 41 nach Aufarbeitung der proportionalen Spannung US zur Verfügung gestellt wird.

Zur Tiefenkoordinatensteuerung des dem Laserfocuspunkt entsprechenden Schweißpunktes 9 mißt ein Meßlaser 58 den zur optischen Achse des focussierten Laserstrahles parallelen Abstand der Schlitzrohroberfläche an den Bandkanten 4 und 5 relativ zum Schweißpunkt 9. Die Abstandsmessung erfolgt hierbei mit dem bekannten Triangulationsverfahren, bei dem ein Laserstrahl schräg auf die Oberfläche eines Objektes gerichtet, reflektiert und wieder empfangen wird.

Ausgewertet wird mit Hilfe einer Zeilenkamera der Abstand zwischen Ausgangspunkt des Meßstrahles und Empfangspunkt des reflektierten Strahles, welcher der Entfernung zur Oberfläche des Objektes direkt proportional ist und in Form einer analo-gen Spannung Ul als Eingangssignal and die Verarbeitungseinheit 59 gegeben.

Die Verarbeitungseinheit 59 liefert nach weiterer Aufarbeitung der der Bewegunge der Bandkanten in Umfangsrichtung proportionalen analogen Spannung Uq aus der Auswerteeinheit 25 die Steuerspannungen für die hier nicht dargestellten elektrischen Antriebe der Drei-Koordinatensteuerung 60 des Laserschweißkopfes 61.

Der Laserschweißkopf 61 besitzt eine Schutzgaszufuhr 62, über die durch ein den Laserstrahl in den Laserschweißkopf 61 umgebenden, nicht dargestellten Ringraum das Schutzgas bis zum Schweißpunkt 9 geführt wird.

Die schmelzgeschweißte Naht 63 durchläuft mit Vorschubgeschwindigkeit die Kühlstrecke 16 bis zum Stauchpunkt 17, wo sie durch die Stauchrollen 64 und 65 senkrecht zur Schweißnahtdickenrichtung gestaucht wird (Fig. 4b).

Die Zustellung der Stauchrollen 64 und 65 erfolgt über hier nicht dargestellte, auf Stellspindeln wirkende Stellmotoren, die ihre Steuerspannungen über die Verarbeitungseinrichtung 66 erhalten. Hierzu wertet und vergleicht die Verarbeitungseinrichtung 66 die von den Fernsehkameraeinheiten 67 und 68 als Ausgangssignale erhaltenen analogen Spannungen.

Diese analogen Spannungen resultieren aus und sind proportional einer Stauchwulstbreitenmessung, welche mit Hilfe der Endoskope 69 und 70 auf der Innen- und auf der Außenseite der Naht durchgeführt werden sowie aus der nachfolgenden, in den Fernsehkameraeinheiten durchgeführten Aufarbeitung nach den bei dem Nahtverfolgungssystem 20 angesprochenen bekannten Verfahren der Kontrastermittlung anhand einer definierten mittleren Helligkeitsschwelle.

Die handelsüblichen Endoskope 69 und 70 besitzen jeweils ein kreisförmig angeordnetes Lichtleitfaserpaket zur Betrachtung und ein umgebendes, ringförmig angeordnetes Lichtleitfaserpaket zur Beleuchtung des abzubildenden Bereiches.

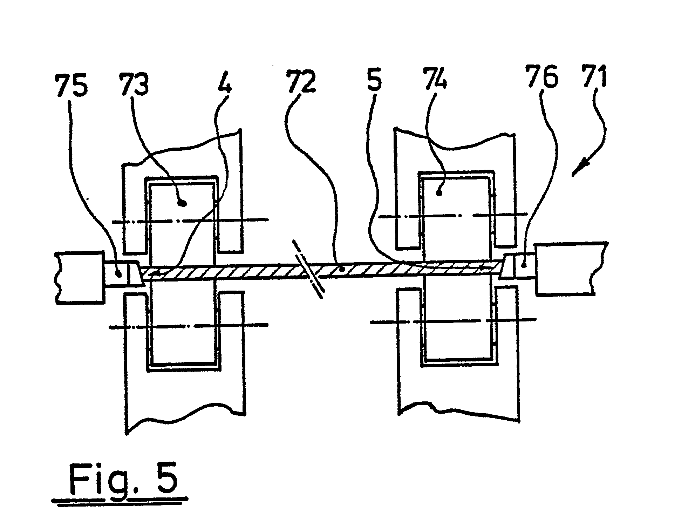

Fig. 5 zeigt die Bandkantenvorbereitungseinheit 71, bei der das noch nicht geformte Bandvormaterial 72 durch Halterollen 73 und 74 geführt und an beiden Bandkanten 4 und 5 durch hydraulisch angestellte Hobelwerkzeuge 75 und 76 bearbeitet wird. Hierbei erfolgt ein leichtes Anschrägen der Bandkanten 4 und 5 mit einem Winkel, der den aufgrund der Zug- und Druckspannungen in der Außen- und Innenfaser nach dem Einformen entstehenden Verzug der Bandkanten kompensiert.

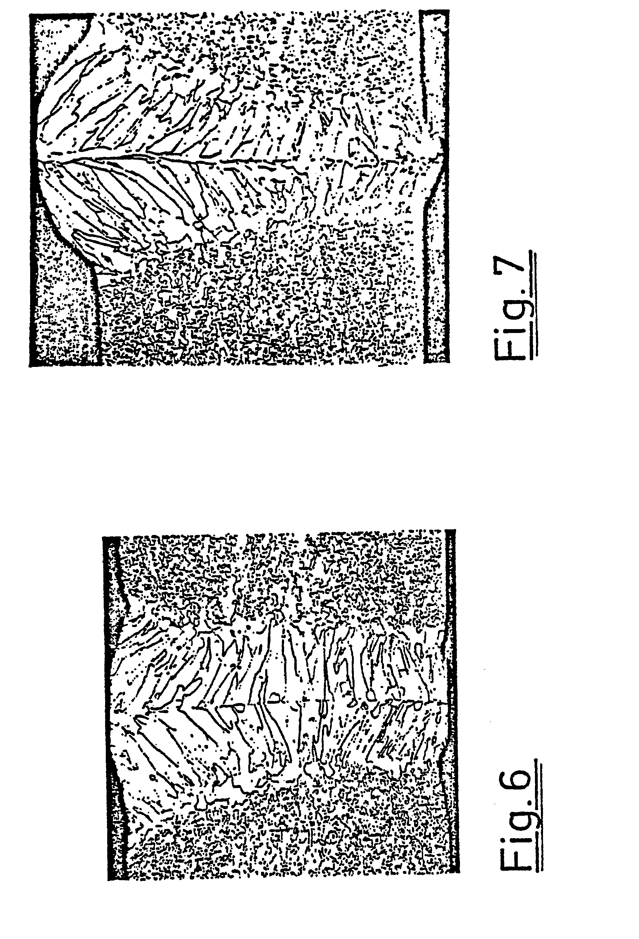

Fig. 6 zeigt einen Querschnitt der schmelzgeschweißten Naht 63 eines Rohres der Abmessung DA 63,5 x Wd 5 mm in entsprechender Vergrößerung. Als Werkstoff wurde hier der ferritische Edelstahl verwendet. Deutlich sichtbar sind die Nahtrückfälle auf der Innen- und Außenseite links und rechts der Naht am Übergang zum Grundmaterial.

Fig. 7 zeigt einen Querschnitt der Naht 77 des selben Rohres nach Durchlaufen der Kühlstrecke 16 und der Stauchung 18.

Die Stauchwulstvolumina auf der Innen- und auf der Außenseite der Naht stehen in einem Verhältnis von etwa 1:10 und sind über die Rohrlänge völlig gleichförmig ausgebildet.

Die Nahtrückfälle auf der Innen- und der Außenseite der Naht sind vollkommen ausgestaucht, ohne ein im Vergleich zur schmelzgeschweißten Naht 63 wesentlich stärkeres Ablenken der Werkstoffzeile.

Das beschriebene Verfahren für größere Wanddicken ist selbstverständlich auch bei geringen Wanddicken unter 3 mm anwendbar.

**Patentansprüche**

1. Verfahren zur Herstellung rohrförmiger Körper, bei dem beschichtetes oder unbeschichtetes Stahlband kontinuierlich zu einem Schlitzrohr eingeformt und die gegenüberliegenden Bandkanten mit hoher Geschwindigkeit durch einen Laserstrahl hoher Energiedichte mit oder ohne Zufuhr von Zusatzmaterial unter Schutzgas längsnahtgeschweißt werden, dadurch gekennzeichnet
- daß die zu verschweißenden Bandkantenflächen zunächst bis auf eine mittlere Rauhtiefe vorbereitet werden, die geringer als die Hälfte des im Schweißspalt vorhandenen Strahldurchmessers ist
- daß die Bandkanten danach nahezu versatzfrei so nah zusammengeführt werden, daß die Spaltbreite zwischen ihnen kleiner als der Durchmesser der Focuspunktes ist
- daß daraufhin die Bandkanten in gleichem Abstand von der optischen Achse des focussierten Laserstrahles sich gegenüberliegend durch den Focusbereich des Laserstrahles geführt und unter Beibehaltung eines geringen und gesteuerten Schweißspaltes ohne Druck senkrecht zur Bandkantenfläche schmelzgeschweißt werden
- daß der Nahtbereich nachfolgend zur Abkühlung bis auf maximal eine dem Haltepunkt Ar 3 des Eisenkohlenstoffdiagramms bei C-Stählen oder auf maximal eine der Erstarrung und Dendritbildung entsprechende Temperatur bei Edelstählen und/oder austenitischen Materialien eine Kühlstrecke durchläuft
- und daß nach der Abkühlung der Nahtbereich einer Stauchung unterworfen wird, wobei Stauchweg und/oder Stauchkraft in Abhängigkeit vom Stauchwulstvolumen gesteuert werden und das Stauchwulstvolumen durch Vermessung des Innen- und/oder Außenstauchwulstes nach der Stauchung bestimmt wird.

2. Verfahren nach Anspruch 1, dadurch gekennzeichnet, daß die Vorbereitung der Bandkantenflächen auf eine mittlere Rauhtiefe, welche geringer ist als die Hälfte des im Schweißspalt vorhandenen Strahldurchmessers, durch Laserschneiden erfolgt.

3. Verfahren nach Anspruch 1 - 2, dadurch gekennzeichnet, daß zur versatzfreien Zusammenführung der Bandkanten der vor der Zusammenführung vorhandene Bandkantenversatz gemessen wird und vor dem Schweißpunkt auf einen Höchstwert von 20 % der Wandddicke reduziert wird.

4. Verfahren nach Anspruch 1 - 3, dadurch gekennzeichnet, daß die Führung der Bandkanten durch den Focusbereich des Laserstrahles in gleichem Abstand von der optischen Achse gegenüberliegend durch eine ebene Positionssteuerung des Focuspunktes erfolgt, wobei
- die Tiefenkoordinate mit der optischen Achse des focussierten Laserstrahles übereinstimmt
- und die Querkoordinate senkrecht zur Rohrachse und als Bogensegment ausgebildet ist, dessen Mittelpunkt in der Rohrachse liegt und dessen Radius durch den Abstand des Focuspunktes von der Rohrachse bestimmt wird.

5. Verfahren nach Anspruch 1, dadurch gekennzeichnet, daß zur Querkoordinatensteuerung die Abweichung des Schweißspaltes in Umfangsrichtung oder eine entsprechende Lageabweichung einer zu diesem Schweißspalt parallelen Markierung relativ zum Focuspunkt berührungslos ermittelt wird.

6. Verfahren nach Anspruch 4, dadurch gekennzeichnet, daß zur Tiefenkoordinatensteuerung die Änderung des zur optischen Achse des focussierten Laserstrahles parallelen Abstandes zwischen der Rohroberfläche und den Bandkanten und dem Focuspunkt berührungslos gemessen wird.

7. Verfahren nach Anspruch 1 - 6, dadurch gekennzeichnet, daß die Schweißspaltbreite vor dem Schweißpunkt berührungslos gemessen und als Eingangsgröße zur Schweißspaltbreitensteuerung im Schweißpunkt genutzt wird.

8. Verfahren nach Anspruch 1 - 7, dadurch gekennzeichnet, daß die Abkühlungsrate des Nahtbereiches zwischen Schmelzschweißen und Stauchung bei gleichbleibender Kühlstrecke durch eine Erwärmung der zu verschweißenden Bandkanten vor und/oder nach dem Schweißpunkt gesteuert wird in Abhängigkeit der nach der Stauchung ermittelten Temperatur des Nahtbereiches.

9. Verfahren nach Anspruch 1 - 8, dadurch gekennzeichnet, daß das Stauchwulstvolumen durch eine Höhenmessung des Stauchwulstes bestimmt wird.

2. Verfahren nach Anspruch 1 - 8, dadurch gekennzeichnet, daß das Stauchwulstvolumen durch eine Breitenmessung des Stauchwulstes bestimmt wird.

11. Verfahren nach Anspruch 1 - 8, dadurch gekennzeichnet, daß das Stauchwulstvolumen durch eine Flankenwinkelmessung des Stauchwulstes bestimmt wird.

12. Verfahren nach Anspruch 1 - 11, dadurch gekennzeichnet, daß Stauchweg und/oder Stauchkraft in Abhängigkeit vom Stauchwulstvolumen so gesteuert werden, daß das Verhältnis von Innenstauchwulstvolumen zu Außenstauchwulstvolumen kleiner oder gleich 1:3 wird.

13. Vorrichtung zur Durchführung des Verfahrens nach Anspruch 1 - 12, dadurch gekennzeichnet, daß eine Bandkantenvorbereitungseinheit (71) vorgesehen ist, welche die Bandkantenflächen auf eine mittlere Rauhtiefe vorbereitet, die geringer ist als die Hälfte des im Schweißspalt vorhandenen Strahldurchmessers, daß Führungselemente (27) und (28) sowie (56) und (57) vorhanden sind, welche die Bandkanten (4) und (5) nahezu versatzfrei so nah zusammenführen, daß die Spaltbreite zwischen ihnen kleiner als der Durchmesser des Focuspunktes ist, daß eine Meßeinrichtung (42) vorgesehen ist, welche den Bandkantenversatz sowie die Schweißspaltbreite zwischen dem Schweißpunkt und den Führungselementen (27) und (28) bestimmt und in proportionale elektrische Impulse umwandelt, daß Stellungsfühler (39) (40) vorhanden sind, die jeweilige augenblickliche Stellung der Führungselemente (27) und (28) in der dem Kantenversatz parallelen Höchenachse in proportionale elektrische Impulse umformen, daß eine Verarbeitungseinrichtung (41) vorgesehen ist, welche die elektrischen Impulse der Meßeinrichtung (42) und der Stellungsfühler (39) und (40) verarbeitet und die Führungselemente (27) und (28) mindestens in ihrer dem Kantenversatz parallelen Höchenachse und die Führungselemente (56) und (57) in ihrer Zustellung senkrecht zur Rohrachse und zur optischen Achse steuert daß ein Laserschweißkopf (61) mit einer Dreikoordinatensteurung (60) vorhanden ist, welche den Focuspunkt des Laserstrahles in einer Ebene so positioniert, daß die Bandkanten in gleichem Abstand von der optischen Achse des Laserstrahles gegenüberliegend durch den Focusbereich des Laserstrahles geführt werden und

– die Tiefenkoordinate mit der optischen Achse des focussierten Laserstrahles übereinstimmt

– und die Querkoordinate senkrecht zur Rohrachse und als Bogensegment ausgebildet ist, dessen Mittelpunkt in der Rohrachse liegt und dessen Radius durch den Abstand des Focuspunktes von der Rohrachse bestimmt wird.

daß ein berührungslos arbeitendes Nahtverfolgungssystem (20) vorhanden ist, welches entweder die Abweichung des Schweißspaltes in Umfangsrichtung oder eine entsprechende Lageabweichung einer zu diesem Schweißspalt parallelen Markierung relativ zum Focuspunkt ermittelt und in proportionale elektrische Impulse umwandelt, daß ein berührungslos arbeitendes Abstandmeßsystem (58) vorgesehen ist, welches den der optischen Achse des focussierten Laserstrahles parallelen Abstand der Rohroberfläche an den Bandkanten relativ zum Focuspunkt des focussierten Laserstrahls ermittelt und in proportionale elektrische Impulse umwandelt, daß eine Verarbeitungseinheit (59) vorgesehen ist, welche mit Hilfe der elektrischen Impulse des Nahtverfolgungssystems (20) und des Abstandsmeßsystems (58) die Dreikoordinatensteuerung (60) steuert, daß eine Erwärmungseinrichtung (52) vorgesehen ist, welche die Bandkanten vor oder nach dem Schweißpunkt erwärmt, daß eine Temperaturmeßeinrichtung (55) vorhanden ist, welche die Temperatur der Schweißnaht nach der Stauchung mißt und in proportionale elektrische Impulse unformt, daß eine Verarbeitungseinheit (54) vorgesehen ist, welche mit Hilfe der elektrischen Impulse der Temperaturmeßeinrichtung (55) die Erwärmungseinrichtung (52) steuert, daß zustellbare Staucheinrichtungen (64) und (65) vorgesehen sind, welche den Nahtbereich nach Durchlaufen einer Kühlstrecke stauchen, daß Aufnahmegeräte (67) und (68) vorhanden sind, welche nach der Stauchung den Innen- und/oder Außenstauchwulst vermessen und elektrische Impulse erzeugen, die einer geometrischen Größe des jeweiligen Stauchwulstes proportional sind, und daß eine Verarbeitungseinrichtung (66) vorhanden ist, welche anhand der elektrischen Impulse der Aufnahmegeräte (67) und (68) die Zustellung der Staucheinrichtung (64) und (65) steuert.

14. Vorrichtung nach Anspruch 13, dadurch gekennzeichnet, daß die Führungselemente (27) und (28) sowie (56) und (57) als auf dem Rohrumfang insbesondere in Rohrlängsrichtung abrollende Einrichtung ausgebildet sind.

15. Vorrichtung nach Anspruch 13, dadurch gekennzeichnet, daß die Führungselemente (27) und (28) sowie (56) und (57) als auf dem Rohrumfang insbesondere in Rohrlängsrichtung gleitende Einrichtung ausgebildet sind.

16. Vorrichtung nach Anspruch 13 - 15, dadurch gekennzeichnet, daß die Meßeinrichtung (42) als Lichtschnittmeßeinrichtung ausgebildet ist.

17. Vorrichtung nach Anspruch 13 - 16, dadurch gekennzeichnet, daß die Stellungsfühler (39) und (40) als Potentiometer ausgebildet sind.

18. Vorrichtung nach Anspruch 13 - 17, dadurch gekennzeichnet, daß das Nahtverfolgungssystem (20) als optisch arbeitendes System ausgebildet ist.

19. Vorrichtung nach Anspruch 13 - 18, dadurch gekennzeichnet, daß das Abstandsmeßsystem (58) als Lasermeßeinrichtung ausgebildet ist.

20. Vorrichtung nach Anspruch 13 - 19, dadurch gekennzeichnet, daß die Erwärmungseinrichtung (52) als Induktionsspule ausgebildet ist.

21. Vorrichtung nach Anspruch 13 - 19, dadurch gekennzeichnet, daß die Erwärmungseinrichtung (52) als Laserstrahlerwärmung ausgebildet ist.

22. Vorrichtung nach Anspruch 13 - 19, dadurch gekennzeichnet, daß die Erwärmungseinrichtung (52) als Wärmestrahler ausgebildet ist.

23. Vorrichtung nach Anspruch 13 - 22, dadurch gekennzeichnet, daß die Temperaturmeßvorrichtung (55) als Strahlungspyrometer ausgebildet ist.

24. Vorrichtung nach Anspruch 13 - 23, dadurch gekennzeichnet, daß die Staucheinrichtungen (64) und (65) als Rollen- und/oder Rollenkäfige ausgebildet sind.

25. Vorrichtung nach Anspruch 13 - 23, dadurch gekennzeichnet, daß die Staucheinrichtungen (64) und (65) als Gleitformsteine und/oder -ringe ausgebildet sind.

26. Vorrichtung nach Anspruch 13 - 25, dadurch gekennzeichnet, daß die Aufnahmegeräte (67) und (68) als optisch arbeitende Einrichtungen ausgebildet sind.

27. Vorrichtung nach Anspruch 13 - 25, dadurch gekennzeichnet, daß die Aufnahmegeräte (67) und (68) als mechanische Taster ausgebildet sind.

28. Vorrichtung nach Anspruch 13 - 25, dadurch gekennzeichnet, daß die Aufnahmegeräte (67) und (68) als induktiv arbeitende Einrichtungen ausgebildet sind.

**Revendications**

1. Procédé pour la fabrication de corps tubulaires dans lequel un feuillard d'acier, revêtu ou non, est façonné de manière continue en un tube fendu, et les bords opposés du feuillard sont soudés longitudinalement à grande vitesse, sous atmosphère inerte, par un rayon laser à forte concentration d'énergie, avec ou sans amenée de métal d'apport, caractérisé en ce que:

– les surfaces des bords du feuillard à souder sont d'abord préparées jusqu'à une profondeur de rugosité moyenne qui est inférieure à la moitié du diamètre du rayon à la fente de soudage;

– les bords du feuillard sont ensuite réunis quasiment sans décalage, de manière telle que la longueur de la fente entre eux est inférieure au diamètre du point focal;

– ensuite, les bords du feuillard sont déplacés, à distance égale de part et d'autre de l'axe optique du rayon laser focalisé, dans le domaine focal du rayon laser, et sont soudés par fusion sans pression, perpendiculairement par rapport à la surface des bords du feuillard, en conservant une fente de soudage faible et contrôlée;

– la zone du joint parcourt ensuite un trajet de refroidissement pour la refroidir jusqu'à une température correspondant au maximum au point de transformation Ar 3 du diagramme fer-carbone pour les aciers au carbone, ou au maximum à une température correspondant à la solidification et à la formation de dendrites pour les aciers spéciaux et/ou les matières austénitiques; et

– après refroidissement, la zone du joint est soumise à un refoulement, la course de refoulement et/ou la force de refoulement étant controlées en fonction du volume du bourrelet de refoulement, le volume du bourrelet de refoulement étant déterminé par mesure du bourrelet de refoulement interne et/ou externe après refoulement.

2. Procédé selon la revendication 1, caractérisé en ce que la préparation des surfaces des bords du feuillard jusqu'à une profondeur de rugosité moyenne inférieure à la moitié du diamètre du rayon à la fente de soudage, se fait par découpage au laser.

3. Procédé selon les revendications 1–2, caractérisé en ce que, pour la réunion sans décalage des bords du feuillard, le décalage des bords du feuillard présent avant la réunion est mesuré et amené, avant le point de soudage, à une valeur maximum égale à 20% de l'épaisseur de paroi.

4. Procédé selon les revendications 1–3, caractérisé en ce que le déplacement des bords du feuillard dans le domaine focal du rayon laser, se fait à distance égale de part et d'autre de l'axe optique, grâce à un positionnement exact du point focal, dans lequel:

– l'axe de profondeur coïncide avec l'axe optique du rayon laser focalisé; et

– l'axe transversal est pris perpendiculairement à l'axe du tube, et en tant que segment d'arc dont le centre se situe sur l'axe du tube et dont le rayon est déterminé par la distance du point focal à l'axe du tube.

5. Procédé selon la revendication 4, caractérisé en ce que, pour la commande de la coordonnée transversale, on détermine sans contact l'écart de la fente de soudage dans le sens périphérique, ou un écart de position correspondant d'un repère parallèle à cette fente de soudage, par rapport au point focal.

6. Procédé selon la revendication 4, caractérisé en ce que, pour la commande de la coordonnée de profondeur, on mesure sans contact la modification de la distance, parallèlement à l'axe optique du rayon laser focalisé, entre la surface du tube et les bords du feuillard et le point focal.

7. Procédé selon la revendication 1–6, caractérisé en ce que la largeur de la fente de soudage, avant le point de soudage, est mesurée sans contact et est utilisée comme grandeur d'entrée pour la commande de la largeur de la fente de soudage au point de soudage.

8. Procédé selon les revendications 1–7, caractérisé en ce que la vitesse de refroidissement de la zone du joint entre le soudage par fusion et le refoulement, pour un parcours de refroidissement constant, est contôlée par un réchauffement des bords du feuillard à souder avant et/ou après le point de soudage, en fonction de la température de la zone du joint déterminée après le refoulement.

9. Procédé selon les revendications 1–8, caractérisé en ce que le volume du bourrelet de refoulement est déterminé par mesure de la hauteur du bourrelet de refoulement.

10. Procédé selon les revendications 1–8, caractérisé en ce que le volume du bourrelet de refoulement est déterminé par la mesure de la largeur du bourrelet de refoulement.

11. Procédé selon les revendications 1–8, caractérisé en ce que le volume du bourrelet de refoulement est déterminé par la mesure de l'angle des flancs du bourrelet de refoulement.

12. Procédé selon les revendications 1–11, caractérisé en ce que le trajet de refoulement et/ou la force de refoulement sont contrôlés en fonction du volume du bourrelet de refoulement, de manière telle que le rapport du volume du bourrelet de refoulement interne par rapport au volume du bourrelet de refoulement externe est inférieur ou égal à 1 : 3.

13. Dispositif pour l'exécution du procédé selon les revendications 1–12, caractérisé en ce qu'il comprend une unité (71) de préparation des bords du feuillard, qui prépare les surfaces des bords du feuillard jusqu'à une profondeur de rugosité de moyenne inférieure à la moitié du diamètre du rayon à la fente de soudage, des éléments de guidage (27) et (28), ainsi que (56) et (57), qui réunissent les bords du feuillard (4) et (5) quasiment sans décalage et de manière si rapprochée que la largeur de la fente entre eux est inférieure au diamètre du point focal, un dispositif de mesure (42), qui détermine le décalage des bord du feuillard ainsi que la largeur de la fente de soudage entre le point de soudage et les éléments de guidage (27) et (28), et les transforme en impulsions électriques proportionnelles, des capteurs de position (39) et (40) qui transforment la position instantanée des éléments de guidage (27) et (28) sur l'axe vertical parallèle au décalage des bord, en impulsions électriques proportionnelles, un dispositif de transformations (41), qui transforme les impulsions électriques du dispositif de mesure (42) et des capteurs de position (39) et (40) et contrôle les éléments de guidage (27) et (28) au moins sur leur axe vertical parallèle au décalage des bords, et les éléments de guidage (56) et (57) dans leur avance perpendiculairement à l'axe du tube et à l'axe optique, une tête de soudage au laser (61) à commande dans les trois directions (60), qui positionne le point focal du rayon laser dans un plan tel que les bords du feuillard sont déplacés dans le domaine focal du rayon laser, à distance égale de part et d'autre de l'axe optique du rayon laser et que

– l'axe de profondeur coïncide avec l'axe optique du rayon laser focalisé, et

– l'axe transversal est perpendiculaire à l'axe du tube et a la forme d'un segment d'arc, dont le centre se trouve sur l'axe du tube et dont le rayon est déterminé par la distance du point focal à l'axe du tube, un système de poursuite du joint (20) travaillant sans contact, qui détermine soit l'écart de la fente de soudage dans le sens périphérique, soit un écart de position correspondant d'un repère parallèle à cette fente de soudage relativement au point focal, et le transforme en impulsions électriques proportionnelles, un système de mesure de distance (58) travaillant sans contact, qui détermine la distance, parallèlement à l'axe optique du rayon laser focalisé, de la surface du tube aux bords du feuillard par rapport au point focal du rayon laser focalisé, et la transforme en impulsions électriques proportionnelles, une unité de traitement (59) qui actionne la commande à trois dimensions (60) à l'aide des impulsions électriques du système de poursuite du joint (20) et du systèmes de mesure de distance (58), un dispositif de réchauffement (52) qui réchauffe les bords du feuillard avant ou après le point de soudage, un dispositif de mesure de température (55), qui mesure la température du joint de soudage après le refoulement, et la transforme en impulsions électriques proportionnelles, une unité de traitement (54) qui commande le dispositif de réchauffement (52) à l'aide des impulsions électriques du dispositif de mesure de température (55), des dispositifs de refoulement réglables (64) et (65) qui refoulent la zone du joint après passage par un parcours de refroidissement, des capteurs (67) et (68) qui mesurent le bourrelet de refoulement interne et/ou externe après refoulement, et génèrent des impulsions électrique qui sont proportionnelles à une grandeur géométrique du bourrelet de refoulement, et un dispositif de traitement (66) qui commande l'avance du dispositif de refoulement (64) et (65) à partir des impulsions électriques des capteurs (67) et (68).

14. Dispositif selon la revendication 13, caractérisé en ce que les éléments de guidage (27) et (28) ainsi que (56) et (57) ont la forme d'un dispositif roulant sur le pourtour du tube, en particulier dans le sens longitudinal du tube.

15. Dispositif selon la revendication 13, caractérisé en ce que les éléments de guidage (27) et (28) ainsi que (56) et (57) ont la forme d'un dispositif glissant sur le pourtour du tube, en particulier dans le sens longitudinal du tube.

16. Dispositif selon les revendications 13–15, caractérisé en ce que le dispositif de mesure (42) a la forme d'un dispositif de mesure optique.

17. Dispositif selon les revendications 13–16, caractérisé en ce que les capteurs de position (39) et (40) ont la forme de potentiomètres.

18. Dispositif selon les revendications 13–17, caractérisé en ce que le système de poursuite du joint (20) a la forme d'un système à fonctionnement optique.

19. Dispositif selon les revendications 13–18, caractérisé en ce que le système de mesure de distance (59) a la forme d'un dispositif de mesure à laser.

20. Dispositif selon les revendications 13–19, caractérisé en ce que le dispositif de réchauffement (52) a la forme d'une bobine d'induction.

21. Dispositif selon les revendications 13–19, caractérisé en ce que le dispositif de réchauffement (52) a la forme d'un réchauffeur à rayon laser.

22. Dispositif selon les revendications 13–19, caractérisé en ce que le dispositif de réchauffement (52) a la forme d'un radiateur thermique.

23. Dispositif selon les revendications 13–22, caractérisé en ce que le dispositif de mesure de température (55) a la forme d'un pyromètre optique.

24. Dispositif selon les revendications 13–23, caractérisé en ce que les dispositifs de refoulement (64) et (65) ont la forme de rouleaux et/ou de cages.

25. Dispositif selon les revendications 13–23, caractérisé en ce que les dispositifs de refoulement (64) et (65) ont la forme de pièces moulées ou d'anneaux de glissement.

26. Dispositif selon les revendications 13–25, caractérisé en ce que les capteurs (67) et (68) ont la forme de dispositifs à fonctionnement optique.

27. Dispositif selon les revendications 13–25, caractérisé en ce que les capteurs (67) et (68) ont la forme de capteurs mécaniques.

28. Dispositif selon les revendications 13–25, caractérisé en ce que les capteurs (67) et (68) ont la forme de dispositifs à fonctionnement inductif.

## Claims

1. Process for the production of tubular bodies, in which coated or uncoated steel strip is continuously formed into a slit tube and the oppositely-lying strip edges are longitudinally seam-welded under protective gas at high speed by high energy density laser radiation with or without supplying filler material, characterised in that

– the strip edge surfaces to be welded are first prepared to a mean depth of roughness which is less than half of the beam diameter at the welding gap

– the strip edges are with virtually no misalignment then brought so nearly together that the width of the gap between them is smaller than the diamter of the focus point

– the opposed strip edges, located at equal distances from the optical axis of the focused laser beam, are then guided through the focus region of the laser beam and, whilst maintaining a small and controlled weld gap without pressure, fusion welded perpendicularly to the strip edge surfaces

– the seam region then passes through a cooling stage to be cooled to a maximum temperature corresponding to the coalescence point Ar 3 of the iron-carbon diagram for C-steels or to solidification and dendrite-formation in high-grade steels and/or austenitic materials

– and, after cooling, the seam region is subjected to compression in which the compressive movement and/or compressive force is controlled in dependence upon the compression bead volume and the compression bead volume is ascertained by measurement of the inner and/or outer compression bead after the compression.

2. Process according to claim 1, characterised in that the preparation of the strip edge surfaces to a means depth of roughness which is less then half of the beam diameter at the weld gap is carried out by laser cutting.

3. Process according to claims 1 and 2, characterised in that for the misalignment-free bringing together of the strip edges, the strip edge misalignment existing before the bringing together is measured and is reduced before the welding step to a maximum value of 20% of the wall thickness.

4. Process according to claims 1 to 3, characterised in that the guiding of the strip edges through the focus region of the laser beam at equal distances from the optical axis and with the strip edges lying opposite each other is carried out by a two-dimensional positional control of the focus point, in which

– the depth co-ordinate conicides with the optical axis of the focussed laser beam

– and the transverse co-ordinate perpendicular to the tube axis is formed as an arc segment, the mid-point of which lies on the tube axis and the radius of which is determined by the distance of the focus point from the tube axis.

5. Process according to claim 4, characterised in that for the transverse co-ordinate control, the deviation of the welding gap in the circumferential direction, or a corresponding positional deviation of a mark parallel to the welding gap, relative to the focus point is determined without contact.

6. Process according to claim 4, characterised in that for the depth co-ordinate control, the change in the distance parallel to the optical axis of the focussed laser beam between the tube surface at the strip edges and the focus point is measured without contact.

7. Process according to claims 1 to 6, characterised in that the welding gap width is measured without contact before the welding point and is used as an input value for the welding gap width control at the welding point.

8. Process according to claims 1 to 7, characterised in that the cooling rate of the seam region between fusion welding and compression is controlled in the same cooling sections by heating of the strip edges to be welded before and after the welding point, in dependence upon temperature of the seam region determined after compression.

9. Process according to claims 1 to 8, characterised in that the compression bead volume is determined by height measurement of the compression bead.

10. Process according to claims 1 to 8, characterised in that the compression bead volume is determined by width measurement of the compression bead.

11. Process according to claims 1 to 8, characterised in that the compression bead volume is determined by flank angle measurement of the compression bead.

12. Process according to claims 1 to 11, characterised in that compressive movement and/or compressive force is so controlled in dependence upon the compression bead volume that the ratio of the inner compression bead volume to the outer compression bead volume is less than or equal to 1 : 3.

13. Apparatus for carrying out the process of claims 1 to 12, characterised in that a strip-edge preparation unit (71) is provided which prepares the strip edge surfaces to a mean depth of roughness less than half of the beam diameter in the welding gap, guide elements (27) and (28), as well as (56) and (57), are provided which guide the strip edges (4) and (5) so close together with virtually no misalignment that the width of the gap between them is smaller than the diameter of the focus point, a measuring device (42) is provided which determines the strip edge misalignment as well as the welding gap width between the welding point and the guide elements (27) and (28) and converts it into proportional electrical impulses, position sensors (39) and (40) are provided which convert the respective instantaneous positions of the guide elements (27) and (28) along the height axis parallel to the edge misalignment into proportional electrical impulses, a processing device (41) is provided which processes the electrical impulses from the measuring device (42) and the position sensors (39) and (40) and controls the guide elements (27) and (28), at least along their height axis parallel to the edge misalignment, and the guide elements (56) and (57) in their feed motion perpendicular to the tube axis and to the optical axis, a laser welding head (61) with three co-ordinate control (60) is provided which so positions the focus point of the laser beam in a plane that the strip edges are led lying opposite each other at equal distances from the optical axis of the laser beam through the focus region of the laser beam and

– the depth co-ordinate concides with the optical axis of the focussed laser beam

– and the transverse co-ordinate perpendicular to the tube axis is formed as an arc segment, the mid-point of which lies on the tube axis and the radius of which is determined by the distance of the focus point from the tube axis, a contactless seam tracking system (20) is provided which determines either the deviation of the welding gap in the circumferential direction, or a corresponding positional deviation of a mark parallel to the welding gap, relative to the focus point and converts it into proportional electrical impulses, a contactless distance-measuring system (58) is provided which determines the distance parallel to the optical axis of the focussed laser beam of the tube surface at the strip edges relative to the focus point of the focussed laser beam and converts it into proportional electrical impulses, a processing unit (59) is provided which controls the three co-ordinate control (60) with the aid of the electrical impulses of the seam-tracking system (20) and the distance-measuring system (58), a heating device (52) is provided which heats the strip edges before or after the welding point, a temperature-measuring device (55) is provided which measures the temperature of the welded seam after compression and converts it into proportional electrical impulses, a processing unit (54) is provided which controls the heating device (52) with the aid of the electrical impulses from the temperature-measuring device (55), controllable compression devices (64) and (65) are provided which compress the seam region after a cooling stage has been passed through, recording instruments (67) and (68) are provided which measure the inner and/or outer compression bead after the compression and produce electrical impulses which are proportional to a geometric variable of the respective compression bead, and a processing unit (66) is provided which controls the position of the compression devices (64) and (65) in response to the electrical impulses of the recording instruments (67) and (68).

14. Apparatus according to claim 13, characterised in that the guide elements (27) and (28), as well as (56) and (57), are rolling devices acting on the tube circumference, particularly in the londitudinal direction of the tube.

15. Apparatus according to claim 13, characterised in that the guide elements (27) and (28), as well as (56) and (57), are sliding devices acting on the tube circumference, particularly in the longitudinal direction of the tube.

16. Apparatus according to claims 13 to 15, characterised in that the measuring device (42) is a light-interrupting measurement device.

17. Apparatus according to claims 13 to 16, characterised in that the position sensors (39) and (40) are potentiometers.

18. Apparatus according to claims 13 to 17, characterised in that the seam-tracking system (20) is an optical system.

19. Apparatus according to claims 13 to 18, characterised in that the distance-measuring system (58) is a laser measuring device.

20. Apparatus according to claims 13 to 19, characterised in that the heating device (52) is an induction coil.

21. Apparatus according to claims 13 to 19, characterised in that the heating device (52) is a laser beam heating device.

22. Apparatus according to claims 13 to 19, characterised in that the heating device (52) is a heat radiator.

23. Apparatus according to claims 13 to 22, characterised in that the temperature-measuring device (55) is a radiation pyrometer.

24. Apparatus according to claims 13 to 23, characterised in that the compression devices (64) and (65) comprise as rollers and/or roller cages.

25. Apparatus according to claims 13 to 23, characterised in that the compression devices (64) and (65) are sliding shaped blocks and/or rings.

26. Apparatus according to claims 13 to 25, characterised in that the recording instruments (67) and (68) are optical equipment.

27. Apparatus according to claims 13 to 25, characterised in that the recording instruments (67) and (68) are mechanical probes.

28. Apparatus according to claims 13 to 25, characterised in that the recording instruments (67) and (68) are inductive devices.

Fig. 1

24 25 21 27,28 39,40 41 12 58 59 60 61 62 66

67

68

A

20

55

22

B

70

4 5

77

23

26

19

54

69

53

A

B

64,65

29,32 36 30,33 37 31,34 38 35 52 42 9 56,57 63 16 17

Fig. 2

EP 0 262 363 B1

49

42

44

43

51

45

5

47

4

# Fig. 3a

49

42

44

43

46

51

48

4

5

# Fig. 3b

Fig. 3c

Fig. 4 a

Fig. 4 b

Fig. 5

Fig. 6

Fig. 7

EP 0 262 363 B1